# EUROPEAN PATENT APPLICATION

(11) **EP 3 193 389 A1**
(43) Date of publication of application: **19.07.2017**
(21) Application number: 16203930.9
(22) Date of filing: 14.12.2016
(51) Int. Cl.: H01M 2/30, H01M 2/34, H01M 10/44, H01M 2/04

(54) **RECHARGEABLE BATTERY UNIT**

(30) Priority: 13.01.2016 JP 2016004558; 26.07.2016 WO PCT/EP2016/067724
(71) Applicant: Lithium Energy and Power GmbH & Co. KG, 70469 Stuttgart (DE)
(72) Inventor: Wilka, Marcel, Bosch Corporation, 532-0004 (JP)
(74) Representative: Bee, Joachim

(57) **Abstract**

The invention relates to a rechargeable battery unit (1), comprising: at least one rechargeable battery cell with at least one anode current collector and at least one cathode current collector; and a cell casing (2) for accommodating the rechargeable battery cell. The cell casing (2) comprises: a first cap-shaped terminal element (3) electrically connected to the anode current collector; a second cap-shaped terminal element (4) electrically connected to the cathode current collector and being spaced apart from the first cap-shaped terminal element (3); and a plastic case (5) accommodating the electrodes of the battery cell and being open at two opposite end sections. One cap-shaped terminal element (3, 4) encompasses one open end section of the plastic case (5) and the other cap-shaped terminal element (3, 4) encompasses the other open end section of the plastic case (5).

## Description

### Prior Art

The invention relates to a rechargeable battery unit comprising at least one rechargeable battery cell with at least one anode current collector and at least one cathode current collector, and a cell casing for accommodating the rechargeable battery cell.

Recently, rechargeable battery cells, such as lithium ion cells, are used in different applications. For example, battery cells are installed in electric vehicles and hybrid electric vehicles to supply electric drive units of such vehicles with electric power. Generally, several battery cells are combined to form a battery unit with battery cells connected in series. The battery unit can be a rechargeable battery or a battery module for composing a modularly constructed rechargeable battery.

In general, lithium-ion-cells are considered to be unsafe. Therefore, measures must be developed that make lithium-ion-cells more safe, especially lithium-ion-cells with intrinsic unsafe materials.

For various reasons, for example when a battery cell is overcharged or deep discharged or has an internal short circuit, heat is generated within the battery cell causing overheating of the battery cell. This overheating may lead to a decomposition reaction of electrolyte and electrode within the defective battery cell generating gas inside of the battery cell. Then, a pressure within the battery cell increases due to the gas generation. This event is referred to as thermal runaway of a battery cell. A thermal runaway of one battery cell of a rechargeable battery unit with several battery cells may lead to a thermal runaway of further battery cells of the rechargeable battery unit. To prevent explosion of a battery cell in case of a thermal runaway, the battery cell may comprise a venting device for venting the battery cell and thereby reducing the pressure within the battery cell. Moreover, a thermal runaway of a battery cell may also cause an ignition of cell components of the battery cell.

To prevent a thermal runaway of a battery cell having an internal short circuit it is known to discharge the battery cell by some load, e.g. a resistor or the like. Such a safety measure may be triggered by a so-called battery management system (BMS) which monitors the condition of the battery cell. Since the battery cell should be discharged as fast as possible, the load should be large and heavy. Additionally, the heat generation in the battery cell and the energy consumption of the battery cell are still large when using such a conventional safety measure.

US 2014/113166 A1 discloses a safety device for arrangement in a battery cell of a lithium-ion battery. The safety device includes at least one metallic conductor configured in a planar form, in particular a metal plate or a metal foil. The conductor includes an insulating layer applied thereon and a terminal contact configured for the electrical connection to a terminal of the battery cell. The conductor has at least one heating resistor with a first contact and a second contact arranged on the insulating layer so as to enable an electric current to be passed through the heating resistor by way of the contacts.

US 2011/0129709 A1 discloses a pouch type secondary battery including a safety member. The pouch type secondary battery includes an electrode assembly including first and second electrode plates having opposite electrical polarities and a first separator between the first and second electrode plates; and a safety member including a first conductive plate located on an outside of the electrode assembly and electrically connected to the first electrode plate, a second conductive plate located on an outside of the first conductive plate and electrically connected to the second electrode plate, and an insulating plate between the first and second conductive plates for insulating the first and second conductive plates from each other, and the first conductive plate has a puncture strength that is greater than a puncture strength of the second conductive plate.

### Disclosure of the invention

It is an object of the present invention to provide a rechargeable battery unit with a simple terminal structure to enhance the energy density and simplify assembly of a battery constituted by such battery units.

This object is solved by the independent claim. Advantageous embodiments are disclosed in the following description, the dependent claims and the drawings, wherein these embodiments either by taken alone or in any combination of at least two embodiments with each other may relate to a preferred or advantageous aspect of the invention.

A rechargeable battery unit according to the present invention comprises at least one rechargeable battery cell with at least one anode current collector and at least one cathode current collector, and a cell casing for accommodating the rechargeable battery cell. The cell casing comprises a first cap-shaped terminal element electrically connected to the anode current collector, a second cap-shaped terminal element electrically connected to the cathode current collector and being spaced apart from the first cap-shaped terminal element, and a plastic case accommodating the electrodes of the battery cell and being open at two opposite end sections, wherein one cap-shaped terminal element encompasses one open end section of the plastic case and the other cap-shaped terminal element encompasses the other open end section of the plastic case.

A rechargeable battery can be constituted by several rechargeable battery units according to the present invention. The battery units can be pressed against each other so that the cap-shaped terminal elements of directly neighboring battery units physically and electrically contact each other. No additional contact elements like conventional cell connectors are necessary. Therefore, the energy density of the battery can be enhanced. The battery units can be connected in series and/or in parallel by simply pressing them together. Therefore, assembly of the battery is simplified.

According to an advantageous embodiment the rechargeable battery unit comprises at least one safety device for discharging the battery cell when the battery cell is in an abnormal state and being electrically connected with the current collectors, wherein the safety device comprises: at least one first electrically conductive layer electrically connected with one current collector; at least one second electrically conductive layer electrically connected with the other current collector; and at least one separator layer with at least one through hole and being arranged between the first electrically conductive layer and the second electrically conductive layer to electrically separate the electrically conductive layers from one another; at least one first solder layer which is at least partly arranged between the first electrically conductive layer and the separator layer; at least one safety layer which is at least partly arranged between the separator layer and the second electrically conductive layer; and at least one second solder layer which is at least partly arranged between the second electrically conductive layer and the safety layer, wherein the safety layer is formed so that, when a temperature of the safety layer exceeds a predetermined threshold temperature, an exothermic reaction of the safety layer material is triggered, and the first solder layer is melted due to heat generated by the exothermic reaction and/or the separator layer changes its state of matter from solid to liquid or gas due to heat generated by the exothermic reaction.

An abnormal state of the battery cell is a state of the battery cell, for example when heat is generated within the battery cell which may cause a thermal runaway of the battery cell. Such an abnormal state may be caused by an overcharging or deep charging of the battery cell or by a defect or a damage of the battery cell. For example, the battery cell may be damaged by a metal object penetrating the battery cell. Further, the battery cell may have a defect in form of an internal short circuit. In each of these exemplary cases the battery cell should be brought in a safe state, in particular to prevent explosion or firing of the battery cell. The battery cell can be brought in the safe state by fast discharging the battery cell, so that heat generation in the battery cell is suppressed. The safety device according to the present invention is able to fast discharge the battery cell, when the battery cell is in an abnormal state. Such an abnormal state can be detected, for example, through monitoring the cell voltage and/or the cell temperature of the battery cell, e.g. by means of a battery management system.

When an electrically conductive object penetrates the safety device according to the invention which is electrically connected to the electrodes of the rechargeable battery cell, a short circuit is formed between the first electrically conductive layer and the second electrically conductive layer by said electrically conductive object. Through this, a large short circuit current flows through the electrically conductive object. This short circuit current generates heat which locally heats the safety device. When the temperature of the safety layer locally exceeds the threshold temperature, an exothermic reaction of the material of the safety layer is triggered generating additional heat acting on the first solder layer to melt the first solder layer. The exothermic reaction propagates from the location, where the temperature for triggering the exothermic reaction is reached first, over the entire safety layer. Since the first solder layer is melted due to heat generated by the exothermic reaction, molten solder of the first solder layer flows in the through hole of the separator layer and contacts the electrically conductive safety layer. Through this, the first electrically conductive layer is electrically connected to the second electrically conductive layer via the molten solder of the first solder layer, the electrically conductive safety layer and the second solder layer. Preferably, the melting temperature of the solder of the first and/or second solder layer is low to ensure that the solder melts when the temperature of the safety layer exceeds the predetermined threshold temperature.

Alternately or additively, the separator layer changes its state of matter from solid to liquid or gas due to heat generated by the exothermic reaction of the material of the safety layer. Through this, a gap between the first solder layer and the safety layer is closed so that the solder (molten or solid) of the first solder layer contacts the safety layer. The fluid or gaseous separator material is pushed aside with the first solder layer and/or the safety layer. Therefore, the first electrically conductive layer is electrically connected to the second electrically conductive layer via the molten or solid solder of the first solder layer, the safety layer and the second solder layer.

Since the entire safety layer is electrically conductive a relative large cross-section area is provided by the electrically conductive safety layer for conducting a relative large current between the first electrically conductive layer and the second electrically conductive layer. The respective extend of the cross-section area for conducting a discharge current through the solder of the first solder layer depends, when the separator layer does not change its state of matter, on the size of the through hole of the separator layer and the number of through holes of the separator layer, since these through holes are filled with the molten solder of the first solder layer. Therefore, a large discharge current can flow in a very short time through the safety device, thereby bringing the rechargeable battery cell as fast as possible in a safe state. This especially also applies, when the separator layer changes its state of matter.

The safety device is a passive device. No additional activation device, such as an electronic or the like, is necessary to activate the safety device. Therefore, the safety device is inexpensive and space-saving and weight-saving.

The safety device may comprise two or more first electrically conductive layers connectable to a first electrode of the battery cell. Alternatively or additionally, the safety device may comprise two or more second electrically conductive layers connectable to a second electrode of the battery cell. The number of first and/or second electrically conductive layers can be selected regarding the desired intensity of the discharge current. The first and/or the second electrically conductive layer may be a metal foil or a metal plate.

The safety device according may comprise two or more safety layers. The safety layer may be a foil or a plate.

If the rechargeable battery unit comprises two or more rechargeable battery cells it preferably comprises a corresponding number of safety devices each being dedicated to one of the battery cells. If one of the safety devices is activated, for example by penetrating the safety device with an electrically conductive object, heat generated by the activated safety device may be transferred to other safety devices of the battery unit leading to an activation of the other safety devices as well. Through this, the whole rechargeable battery unit can be brought in a safe state.

According to a further advantageous embodiment the safety device is arranged inside or outside of the cell casing. Because the entire safety device can be laminar, it can have a very small thickness and still a relative large cross-section area for conducting a large discharge current. This makes it possible to integrate the safety device in a battery cell without the need for modifying the battery cell, which therefore may be a conventional battery cell. In particular, the safety device may be arranged besides or between electrode layers of an electrode stack or a jelly roll. Alternately, the safety device may be located outside of the battery cell. However, since the entire safety device has a very small thickness and still a large cross-section area for the large discharge current, it can be integrated in the rechargeable battery unit without the need for modifying the battery unit, which therefore may be constructed like a conventional battery unit.

According to a further advantageous embodiment the safety device further comprises: at least one sheathing which at least partly accommodates the layers of the safety device; at least one first laminar connecting lug electrically connected to the first electrically conductive layer; and at least one second laminar connecting lug electrically connected to the second electrically conductive layer, wherein the laminar connecting lugs protrude from the sheathing for electrically connecting the electrically conductive layers to the respective current collector. The sheathing may be manufactured from a polyimide material being flexible, heat-resistant and chemically resistant. The sheathing may at least partly accommodate the first electrically conductive layer, the second electrically conductive layer, the separator layer, the first solder layer, the safety layer and the second solder layer. The laminar connecting lugs have a relative large cross-section area to enable a large discharge current to flow through the safety device. A contact area between the respective connecting lug and the respective current collector of the battery cell may be relatively large due to the laminar shape of the respective connecting lug.

According to a further advantageous embodiment the laminar connecting lugs protrude in the same direction or in different directions from the sheathing. Therefore, the positions of the planar-shaped connecting lugs can be adapted to the positions of contact elements that should be electrically contacted by the connecting lugs.

According to a further advantageous embodiment the first electrically conductive layer and the second electrically conductive layer extend between side walls of the cap-shaped terminal elements, the first electrically conductive layer is electrically connected to the first cap-shaped terminal element and is spaced apart from the second cap-shaped terminal element, and the second electrically conductive layer is electrically connected to the second cap-shaped terminal element and is spaced apart from the first cap-shaped terminal element. When the battery cell is crushed so that a distance between the cap-shaped terminal elements is reduced, at least one cap-shaped terminal element contacts the respective electrically conductive layer that is electrically connected to the other cap-shaped terminal element in a non-crushed state of the battery cell. Through this, a large discharge current can flow through said electrically conductive layer, thereby generating heat that heats the safety layer to trigger the above described exothermic reaction of the safety layer. This is possible, because the electrically conductive layers of the safety device extend between side walls of the cap-shaped terminal elements. Also according to this embodiment no activation means are necessary to enable a fast current discharge, so that the rechargeable battery unit is inexpensive and space-saving and weight-saving.

According to a further advantageous embodiment the cell casing is ashlar-formed and the safety device is located at two or more sides of the cell casing. In this case, the safety device is located outside of the battery cell. The more of the surface of the battery cell is covered with the safety device, the more likely is the safety device penetrated by an object impacting on the battery cell. Therefore, it is ensured that the battery cell can be brought to a safe state in various impact situations. The safety device may surround a portion of the battery cell partly or completely.

According to a further advantageous embodiment the rechargeable battery unit comprises at least two battery cells being electrically connected with each other by means of at least one fuse. If the battery cells are not electrically connected with each other by means a fuse, the activation of one safety device of one battery cell would lead to a simultaneous fast discharge of the other battery cells. Therefore, the fuse according to the present embodiment makes it possible to discharge a specific battery cell of a battery unit comprising two or more battery cells without discharging the other battery cells. Due to the fuse, much higher cell capacities could be handled without additional countermeasures. Therefore, more battery cells could be combined with each other to form a safe battery unit. In particular, more jelly roll cells or electrode stack cells could be combined with each other increasing the volumetric utilization of a battery unit, in particular due to an improvement during ultrasonic welding.

### Drawings

Further details, features and advantages of the invention are disclosed in the following description and the drawings showing:
- Figure 1: a schematic and perspective view of an embodiment of a rechargeable battery unit according to the present invention;
- Figure 2: a schematic and perspective view of a further embodiment of a rechargeable battery unit according to the present invention;
- Figure 3: a schematic and perspective view of the safety device shown in Figure 2;
- Figure 4: a schematic and perspective view of a further embodiment of a rechargeable battery unit according to the present invention;
- Figure 5: a schematic and perspective view of the safety device shown in Figure 4;
- Figure 6: a schematic and perspective view of an embodiment of a safety device according to the present invention;
- Figure 7: a schematic cross section of an embodiment of a rechargeable battery unit according to the present invention;
- Figure 8: a schematic cross section of a further embodiment of a rechargeable battery unit according to the present invention; and
- Figure 9: a schematic view of a further embodiment of a rechargeable battery unit according to the present invention.

### Preferred embodiments of the invention

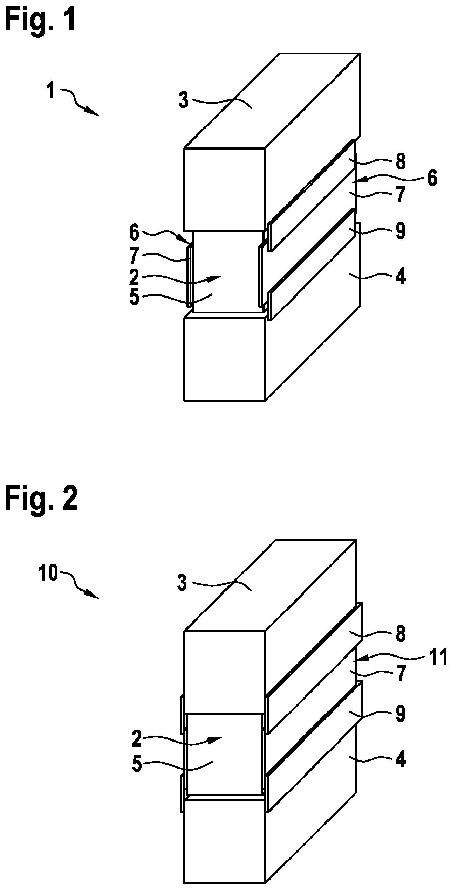

Figure 1 shows a schematic and perspective view of an embodiment of a rechargeable battery unit 1 according to the present invention.

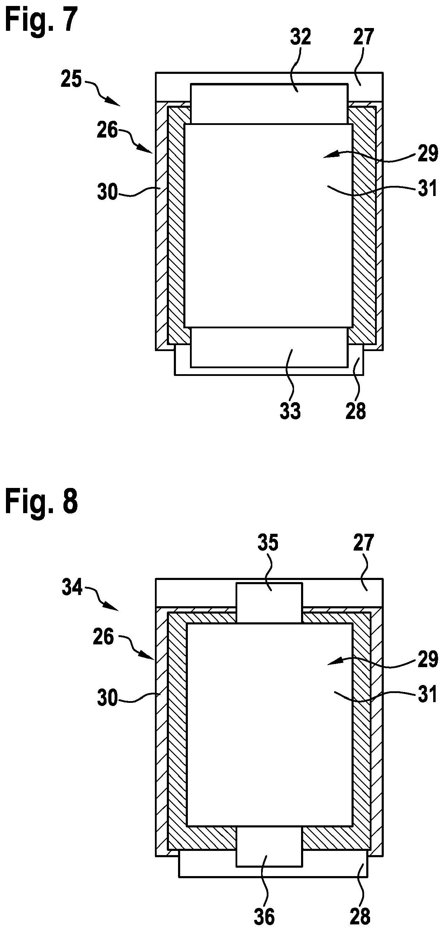

The battery unit 1 comprises at least one rechargeable battery cell (not shown) with at least one anode current collector and at least one cathode current collector. The battery cell may be constructed like the one of the embodiments shown in Figures 7 and 8.

Further, the battery unit 1 comprises a cell casing 2 for accommodating the rechargeable battery cell. The cell casing 2 comprises a first cap-shaped terminal element 3 electrically connected to the anode current collector; a second cap-shaped terminal element 4 electrically connected to the cathode current collector and being spaced apart from the first cap-shaped terminal element 3; and a plastic case 5 accommodating the electrodes of the battery cell and being open at two opposite end sections. The first cap-shaped terminal element 3 encompasses one open end section of the plastic case 5 and the second cap-shaped terminal element 4 encompasses the other open end section of the plastic case 5. The cell casing 2 is ashlar-formed.

Furthermore, the battery unit 1 comprises two safety devices 6 for discharging the battery cell when the battery cell is in an abnormal state and being electrically connected with the current collectors. The safety devices 6 are located at two opposite sides of the cell casing 2. Each safety device 6 is arranged outside of the cell casing 2.

Each safety device 6 comprises: at least one first electrically conductive layer (not shown) electrically connected with one current collector; at least one second electrically conductive layer (not shown) electrically connected with the other current collector; at least one separator layer (not shown) with at least one through hole and being arranged between the first electrically conductive layer and the second electrically conductive layer to electrically separate the electrically conductive layers from one another; at least one first solder layer (not shown) which is at least partly arranged between the first electrically conductive layer and the separator layer; at least one safety layer (not shown) which is at least partly arranged between the separator layer and the second electrically conductive layer; and at least one second solder layer (not shown) which is at least partly arranged between the second electrically conductive layer and the safety layer. The safety layer is formed so that, when a temperature of the safety layer exceeds a predetermined threshold temperature, an exothermic reaction of the safety layer material is triggered. The first solder layer is melted due to heat generated by the exothermic reaction and/or the separator layer changes its state of matter from solid to liquid or gas due to heat generated by the exothermic reaction.

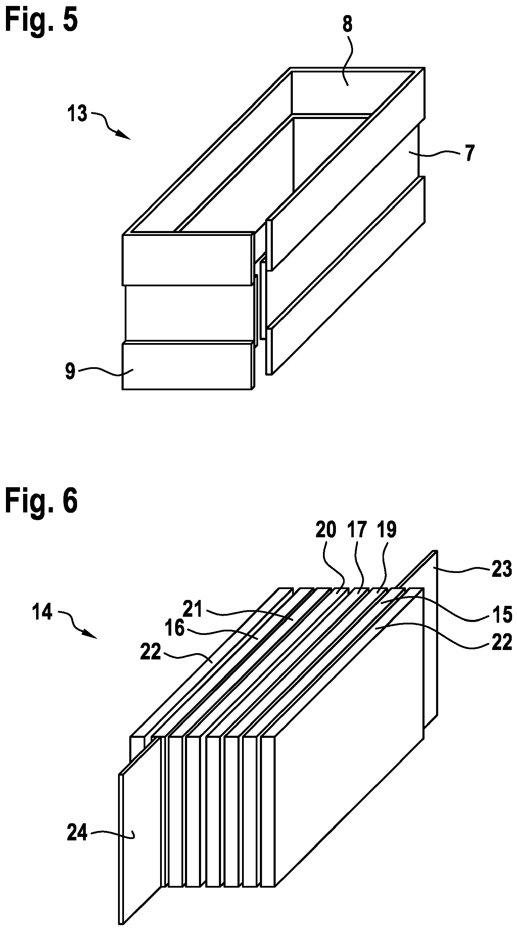

Each safety device 6 further comprises: at least one sheathing 7 which accommodates the above described layers of the respective safety device 6; a first laminar connecting lug 8 electrically connected to the first electrically conductive layer and to the first cap-shaped terminal element 3; and a second laminar connecting lug 9 electrically connected to the second electrically conductive layer and to the second cap-shaped terminal element 4. The laminar connecting lugs 8 and 9 protrude from the sheathing 7 for electrically connecting the electrically conductive layers to the respective current collector via the respective cap-shaped terminal element 3 and 4. The laminar connecting lugs 8 and 9 protrude in different directions from the respective sheathing 7. Each safety device 6 may be constructed like the embodiment shown in Figure 6.

The first electrically conductive layer and the second electrically conductive layer of each safety device 6 extend between respective side walls of the cap-shaped terminal elements 3 and 4. The first electrically conductive layer is electrically connected to the first cap-shaped terminal element 3 and is spaced apart from the second cap-shaped terminal element 4. The second electrically conductive layer is electrically connected to the second cap-shaped terminal element 4 and is spaced apart from the first cap-shaped terminal element 3.

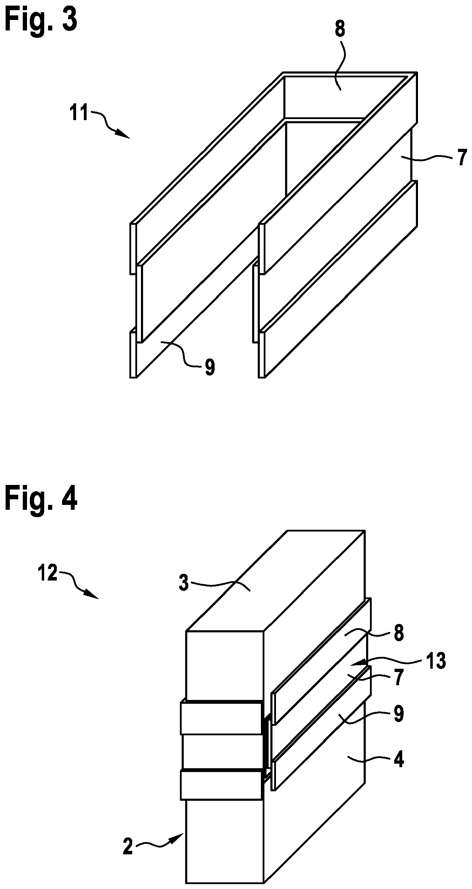

Figure 2 shows a schematic and perspective view of a further embodiment of a rechargeable battery unit 10 according to the present invention. The battery unit 10 differs from the embodiment shown in Figure 1 in that is comprises only one safety device 11 being arranged on three side of the cell casing 2. The safety device 11 is shown in Figure 3. Here, it is referred to the above description of Figure 1 to prevent repeated descriptions of components of the rechargeable battery unit 10 being the same as those of the embodiment shown in Figure 1.

Figure 3 shows a schematic and perspective view of the safety device 11 shown in Figure 2. The U-shaped safety device 11 may be pushed over the cell casing. Thereafter, the connecting lugs 8 and 9 may be fixed to the respective cap-shaped terminal element, for example, be means of laser welding or the like.

Figure 4 shows a schematic and perspective view of a further embodiment of a rechargeable battery unit 12 according to the present invention. The battery unit 12 differs from the embodiment shown in Figure 2 in that the safety device 13 completely surrounds the cell casing 2. Here, it is referred to the above description of Figure 1 to prevent repeated descriptions of components of the rechargeable battery unit 12 being the same as those of the embodiment shown in Figure 1.

Figure 5 shows a schematic and perspective view of the safety device 13 shown in Figure 4. The safety device 13 is annular shaped without forming a closed ring. The O-shaped safety device 13 may be bent up and may be pushed in the bent-up state over the cell casing. Thereafter, the connecting lugs 8 and 9 may be fixed to the respective cap-shaped terminal element, for example, be means of laser welding or the like.

Figure 6 shows a schematic and perspective view of an embodiment of a safety device 14 according to the present invention for a rechargeable battery unit (not shown).

The safety device 14 comprises: a first electrically conductive layer 15 electrically connectable with one current collector (not shown) of the battery cell (not shown) of the battery unit; a second electrically conductive layer 16 electrically connectable with the other current collector; and a separator layer 17 with at least one through hole (not shown) and being arranged between the first electrically conductive layer 15 and the second electrically conductive layer 16 to electrically separate the electrically conductive layers 15 and 16 from one another; a first solder layer 19 which is at least partly arranged between the first electrically conductive layer 15 and the separator layer 17; a safety layer 20 which is at least partly arranged between the separator layer 17 and the second electrically conductive layer 16; and a second solder layer 21 which is at least partly arranged between the second electrically conductive layer 16 and the safety layer 20. The safety layer 20 is formed so that, when a temperature of the safety layer 20 exceeds a predetermined threshold temperature, an exothermic reaction of the safety layer material is triggered. The first solder layer 19 is melted due to heat generated by the exothermic reaction and/or the separator layer 17 changes its state of matter from solid to liquid or gas due to heat generated by the exothermic reaction.

The safety device 14 further comprises: a sheathing 22 which accommodates the layers 16, 16, 17, 19, 20 and 21 of the safety device 14; a first laminar connecting lug 23 electrically connected to the first electrically conductive layer 15; and a second laminar connecting lug 24 electrically connected to the second electrically conductive layer 16. The laminar connecting lugs 23 and 24 protrude from the sheathing 22 for electrically connecting the electrically conductive layers 15 and 16 to the respective current collector. The laminar connecting lugs 25 and 16 protrude in different directions from the sheathing 22.

Figure 7 shows a schematic cross section of an embodiment of a rechargeable battery unit 25 according to the present invention. The battery unit 25 comprises at least one rechargeable battery cell 26 with a first current collector 27 and a second current collector 28. Further, the battery unit 25 comprises a safety device 29 for discharging the battery cell 26 when the battery cell 26 is in an abnormal state. The battery cell 26 comprises a cell casing 30 and the safety device 29 is arranged inside of the cell casing 30. The cell casing 30 may be ashlar-formed. The safety device 29 may be configured like the embodiment shown in Figure 6.

The safety device 29 comprises a sheathing 31 which accommodates the layers of the safety device 29, a first laminar connecting lug 32 electrically connected to the first electrically conductive layer and to the first current collector 27, and a second laminar connecting lug 33 electrically connected to the second electrically conductive layer and to the second current collector 28. The laminar connecting lugs 32 and 33 protrude from the sheathing 31 for electrically connecting the electrically conductive layers to the respective current collector 27 and 28. The laminar connecting lugs 32 and 33 protrude in opposite directions from the sheathing 31. The safety device 29 extends within the battery cell 26 and has a width which at least corresponds to 0,5, 0,7, 0,9 times the width of the battery cell 26.

The cell casing 30 may comprise a first cap-shaped terminal element (not shown) electrically connected to the first current collector 27, a second cap-shaped terminal element (not shown) electrically connected to the second current collector 28 and being spaced apart from the first cap-shaped terminal element, and a plastic case (not shown) accommodating the current collectors 27 and 28 and being open at two opposite end sections. Each cap-shaped terminal element may encompass the respective open end section of the plastic case.

The first electrically conductive layer and the second electrically conductive layer of the safety device 29 may extend between side walls of the cap-shaped terminal elements. The first electrically conductive layer may be electrically connected to the first cap-shaped terminal element and may be spaced apart from the second cap-shaped terminal element. The second electrically conductive layer may be electrically connected to the second cap-shaped terminal element and may be spaced apart from the first cap-shaped terminal element.

Figure 8 shows a schematic cross section of a further embodiment of a rechargeable battery unit 34 according to the present invention. The battery unit 34 differs from the embodiment shown in Figure 7 in that the laminar connecting lugs 35 and 36 are smaller than the connecting lugs shown in Figure 7. Here, it is referred to the above description of Figure 7 to prevent repeated descriptions of components of the rechargeable battery unit 34 being the same as those of the embodiment shown in Figure 7.

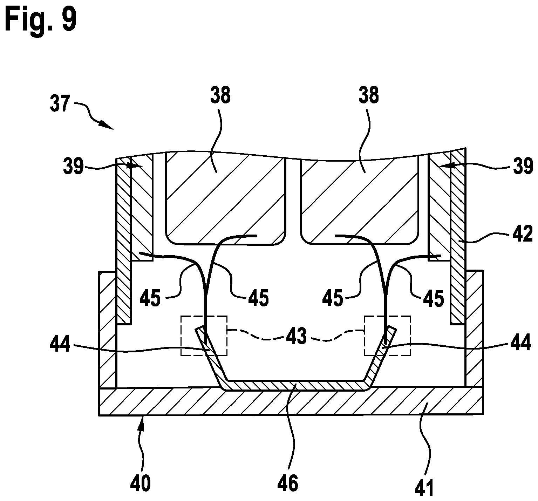

Figure 9 shows a schematic view of a further embodiment of a rechargeable battery unit 37 according to the present invention. The battery unit 37 comprises two or more rechargeable battery cells 38 each having at least one first current collector (not shown) and at least one second current collector (not shown), and two safety devices 39 for discharging the respective battery cell 38 when the battery cell 38 is in an abnormal state. The battery unit 37 comprises a cell casing 40, and the safety devices 39 are arranged inside of the cell casing 40. The cell casing 40 may be ashlar-formed and the safety devices 39 are located at opposite sides of the unit casing 40. Each safety device 39 may be constructed like the embodiment shown in Figure 6.

The cell casing 40 comprises: a first cap-shaped terminal element (not shown) electrically connected to the first current collector of each battery cell 38; a second cap-shaped terminal element 41 electrically connected to the second current collector of each battery cell 38 and being spaced apart from the first cap-shaped terminal element; and a plastic case 42 accommodating the electrodes (not shown) of the battery cells 38 and being open at two opposite end sections, wherein each cap-shaped terminal element 41 encompasses the respective open end section of the plastic case 42.

The first electrically conductive layer and the second electrically conductive layer of each safety device 39 may extend between side walls of the cap-shaped terminal elements 41. The first electrically conductive layer of each safety device may be electrically connected to the first cap-shaped terminal element and may be spaced apart from the second cap-shaped terminal element 41. The second electrically conductive layer of each safety device 39 may be electrically connected to the second cap-shaped terminal element 41 and may be spaced apart from the first cap-shaped terminal element.

The battery cells 38 are each electrically connected with each other by means of two fuses 43. Each fuse 43 is formed by a metal foil 44 which may be perforated. On one side each fuse 43 is electrically connected to one of the battery cells 38 and one of the safety devices 39 by means of a wiring 45. The other side of each fuse 43 is electrically connected to the other fuse 43 by means of a conductor 46.

## Claims

1. A rechargeable battery unit (1, 10, 12, 25, 34, 37), comprising:
- at least one rechargeable battery cell (26, 38) with at least one anode current collector (27) and at least one cathode current collector (28); and
- a cell casing (2, 40) for accommodating the rechargeable battery cell (26, 38);
- wherein the cell casing (2, 40) comprises:
- a first cap-shaped terminal element (3) electrically connected to the anode current collector (27);
- a second cap-shaped terminal element (4, 41) electrically connected to the cathode current collector (28) and being spaced apart from the first cap-shaped terminal element (3); and
- a plastic case (5, 42) accommodating the electrodes of the battery cell (26, 28) and being open at two opposite end sections,
- wherein one cap-shaped terminal element (3, 4, 41) encompasses one open end section of the plastic case (5, 42) and the other cap-shaped terminal element (3, 4, 41) encompasses the other open end section of the plastic case (5, 42).

2. The rechargeable battery unit (1, 10, 12, 25, 34, 37) according to claim 1, comprising
- at least one safety device (6, 11, 13, 14, 29, 39) for discharging the battery cell (26, 28) when the battery cell (26, 28) is in an abnormal state and being electrically connected with the current collectors (27, 28),
- wherein the safety device (6, 11, 13, 14, 29, 39) comprises:
- at least one first electrically conductive layer (15) electrically connected with one current collector (27, 28);
- at least one second electrically conductive layer (16) electrically connected with the other current collector (27, 28); and
- at least one separator layer (17) with at least one through hole and being arranged between the first electrically conductive layer (15) and the second electrically conductive layer (16) to electrically separate the electrically conductive layers (15, 16) from one another;
- at least one first solder layer (19) which is at least partly arranged between the first electrically conductive layer (15) and the separator layer (17);
- at least one safety layer (20) which is at least partly arranged between the separator layer (17) and the second electrically conductive layer (16); and
- at least one second solder layer (21) which is at least partly arranged between the second electrically conductive layer (16) and the safety layer (20),
- wherein the safety layer (20) is formed so that, when a temperature of the safety layer (20) exceeds a predetermined threshold temperature, an exothermic reaction of the safety layer material is triggered, and
- the first solder layer (19) is melted due to heat generated by the exothermic reaction and/or the separator layer (17) changes its state of matter from solid to liquid or gas due to heat generated by the exothermic reaction.

3. The rechargeable battery unit (1, 10, 12, 25, 34, 37) according to claim 2, wherein the safety device (6, 11, 13, 14, 29, 39) is arranged inside or outside of the cell casing (2, 40).

4. The rechargeable battery unit (1, 10, 12, 25, 34, 37) according to claim 2 or 3, wherein the safety device (6, 11, 13, 14, 29, 39) further comprises:
- at least one sheathing (7, 22, 31) which at least partly accommodates the layers (15, 16, 17, 19, 20, 21) of the safety device (6, 11, 13, 14, 29, 39),
- at least one first laminar connecting lug (8, 23, 32, 35) electrically connected to the first electrically conductive layer (15); and
- at least one second laminar connecting lug (9, 24, 33, 36) electrically connected to the second electrically conductive layer (16),
- wherein the laminar connecting lugs (8, 9, 23, 24, 35, 36) protrude from the sheathing (7, 22, 31) for electrically connecting the electrically conductive layers (15, 16) to the respective current collector (27, 28).

5. The rechargeable battery unit (1, 10, 12, 25, 34, 37) according to claim 4, wherein the laminar connecting lugs (8, 9, 23, 24, 35, 36) protrude in the same direction or in different directions from the sheathing (7, 22, 31).

6. The rechargeable battery unit (1, 10, 12, 25, 34, 37) according to any one of claims 2 to 5, wherein
- the first electrically conductive layer (15) and the second electrically conductive layer (16) extend between side walls of the cap-shaped terminal elements (3, 4, 41),
- the first electrically conductive layer (15) is electrically connected to the first cap-shaped terminal element (3) and is spaced apart from the second cap-shaped terminal element (4, 41), and
- the second electrically conductive layer (16) is electrically connected to the second cap-shaped terminal element (4, 41) and is spaced apart from the first cap-shaped terminal element (3).

7. The rechargeable battery unit (1, 10, 12, 25, 34, 37) according to any one of claims 2 to 6, wherein the cell casing (2, 40) is ashlar-formed and the safety device (6, 11, 13, 14, 29, 39) is located at two or more sides of the cell casing (2, 40).

8. The rechargeable battery unit (1, 10, 12, 25, 34, 37) according to one of claims 1 to 7, comprising at least two battery cells (26, 38) being electrically connected with each other by means of at least one fuse (43).
